Europäisches Patentamt

European Patent Office

Office européen des brevets

(19)

(11) Publication number: 0 211 507

A1

(12) **EUROPEAN PATENT APPLICATION**

(21) Application number: 86304977.1

(22) Date of filing: 26.06.86

(51) Int. Cl.⁴: **G 05 F 1/577**
**H 02 H 3/00**

(30) Priority: 26.07.85 US 759569

(43) Date of publication of application:
25.02.87 Bulletin 87/9

(84) Designated Contracting States:
DE FR GB NL

(71) Applicant: TEKTRONIX, INC.
Tektronix Industrial Park D/S Y3-121 4900 S.W. Griffith
Drive P.O. Box 500
Beaverton Oregon 97077(US)

(72) Inventor: Winslow, Jeffrey K.
1020 S.W. Broadway Drive
Portland Oregon 97201(US)

(74) Representative: Wombwell, Francis et al,
Potts, Kerr & Co. 15, Hamilton Square
Birkenhead Merseyside L41 6BR(GB)

(54) **Load-dependent current limiter for the power supply of a multi-module electronia system.**

(57) A load-dependent current limiter for the power supply of a multi-module electronic system has a programming resistor in each module connected between the power supply voltage and a reference bus. The current through each programming resistor is proportional to the current requirements of the module. The voltage of the reference bus, which is proportional to the total current through all the programming resistors, is compared to the voltage developed across a sensing resistor by the total power supply current. When the sense voltage exceeds the reference voltage, indicative of tapping excess power, a signal is sent from the comparator to shutdown the power supply.

FIG. 1.

EP 0 211 507 A1

## LOAD-DEPENDENT CURRENT LIMITER FOR THE
## POWER SUPPLY OF A MULTI-MODULE ELECTRONIC SYSTEM

### Background of the Invention

#### Field of the Invention

The current invention relates to power supply current limiters, and more particularly to a load-dependent current limiter for the power supply of a multi-module electronic system.

#### Description of the Prior Art

Power supplies for an electronic system are designed to match the power needs of each particular system. However, for multi-module electronic systems the power supply must match the power needs of all the modules at once. The result is that when not all the modules are used there is excess power available from the power supply before shutdown. This excess power may be inadvertently tapped at localized spots due to metal chips or whiskers which might get into the equipment. This excess power then appears as localized heat which can damage the modules, or even start a fire. These hazards are more pronounced when the electronic system is being serviced.

What is desired is a means for limiting the excess power supply current to a value which will not pose a safety hazard to either equipment users or service personnel.

### Summary of the Invention

Accordingly, the present invention provides a load-dependent current limiter for the power supply of a multi-module electronic system. Each module has a programming resistor connected between the power supply voltage and a reference bus. The voltage of the reference bus is compared with a sense voltage representing the total power supply current. When the sense voltage exceeds the reference bus voltage, indicative of tapping excess power, a signal is sent to shutdown the power supply.

Objects, advantages and novel features of the present invention will be apparent from the following detailed description when read in conjunction with the appended claims and attached drawings.

## Brief Description of the Drawings

Fig. 1 is a schematic view of a load-dependent current limit according to the present invention.

Fig. 2 is a schematic view of an alternate embodiment of a comparator circuit for the present invention.

## Description of the Preferred Embodiment

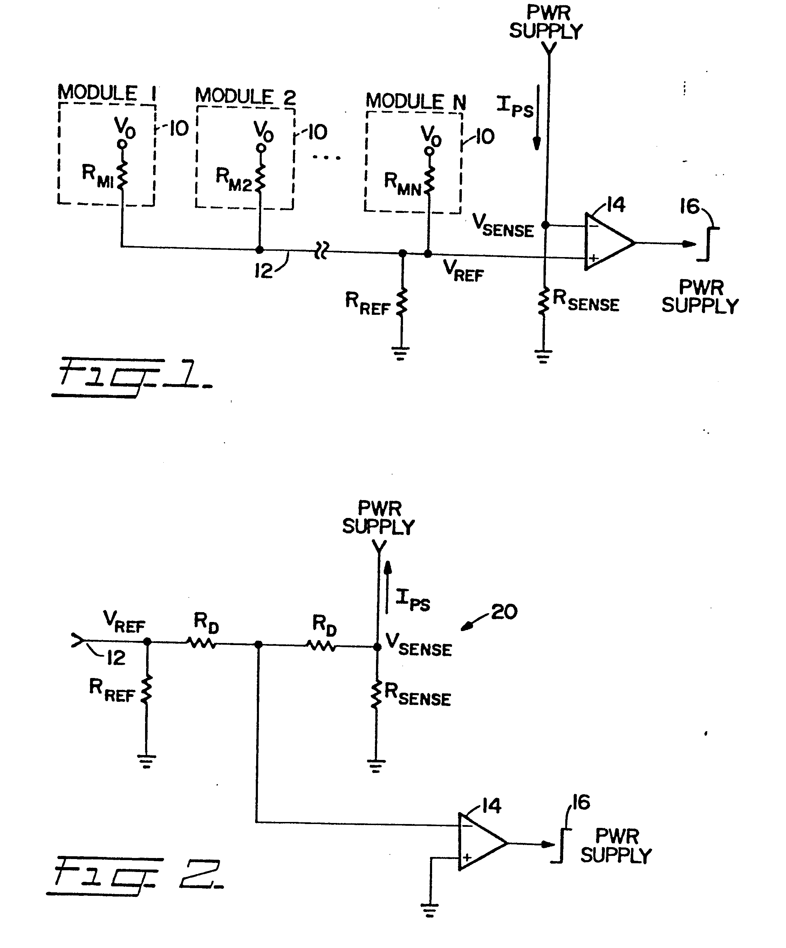

Referring now to Fig. 1 a circuit for providing load-dependent current limiting of a multi-module electronic system power supply is shown. A plurality of electronic modules 10 each have a programming resistor $R_{mx}$ between a power supply output voltage $V_O$ and a reference bus 12. A current is developed through a reference resistor $R_{ref}$ from each module resulting in a reference voltage $V_{ref}$. The programming resistor $R_{mx}$ is chosen so that the current through $R_{mx}$ is proportional to the current required by that module 10 from $V_O$. If the programming resistors $R_{mx}$ are much larger than $R_{ref}$, the total current flowing through $R_{ref}$ closely approximates a current identically proportional to the total required power supply current. A comparator 14 compares the reference voltage $V_{ref}$ with the voltage $V_{sense}$ developed across a sensing resistor $R_{sense}$ by the output current $I_{ps}$ of the power supply. If $V_{sense} > V_{ref}$, the comparator 14, a high gain amplifier, sends a signal 16 to the power supply to indicate an overcurrent fault. Thus, if the output current $I_{ps}$ exceeds the level required by the sum of the modules being powered, the power supply responds accordingly.

An alternative sensing circuit 20 is shown in Fig. 2. The voltages $V_{ref}$ and $V_{sense}$ are summed by resistors $R_d$. Again if $V_{sense} > V_{ref}$, the negative input of the comparator 14 falls below ground and the comparator signals the power supply.

The reference resistor $R_{ref}$ may be replaced by an operational amplifier to sum the currents from the programming resistors $R_{mx}$. The constant of proportionality is set by a feedback resistor on the operational amplifier.

For a digitally-controlled power supply each module 10 communicates a digitally-encoded signal to the power supply which represents the current required by that module. Also start-up current requirements, voltage levels and/or tolerances, and any other information affecting supply operation may be communicated. If any of these requirements varied significantly with time, that fact may also be easily communicated and acted upon in a similar manner.

Thus, the present invention provides a current limit proportional to the expected load so that excess available power from the power supply output is minimized for all loads.

CLAIMS:

1. A load-dependent current limiter for a power supply of an electronic system having a plurality of modules comprising:

means for generating a signal for each of said modules proportional to the current requirement of said module; and

means for comparing said signal from all of said modules with a total current from said power supply, outputting a shutdown signal to said power supply when an overcurrent condition is indicated.

2. A load-dependent current limiter as recited in claim 1 wherein said generating means comprises a programming resistor within each of said modules connected between the output voltage of said power supply and a reference bus.

3. A load-dependent current limiter as recited in claim 2 wherein said comparing means comprises:

a reference resistor connected between said reference bus and electrical ground;

a sensing resistor through which the total power supply current flows; and

a comparator with a reference voltage across said reference resistor as one input and a sense voltage across said sensing resistor as the other input, said comparator providing said shutdown signal when said sense voltage increases with respect to said reference voltage due to said overcurrent condition.

4. A load-dependent current limiter as recited in claim 2 wherein said comparing means comprises:

-6-

a reference resistor connected between said reference bus and electrical ground;

a sensing resistor through which the total current of said power supply flows;

means for summing a reference voltage across said reference resistor and a sensing voltage across said sensing resistor to produce an essentially zero voltage output; and

means for detecting when said essentially zero voltage increases due to said overcurrent condition to output said shutdown signal.

5. A load-dependent current limiter as recited in claim 4 wherein said summing means comprises a resistive voltage divider network connected between said reference resistor and said sensing resistor.

Fig 1.

Fig 2.

European Patent
Office

**EUROPEAN SEARCH REPORT**

0211507

Application number

EP  86 30 4977

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 5, no. 185 (P-91)[857], 25th November 1981; & JP-A-56 111 908 (HITACHI SEISAKUSHO K.K.) 04-09-1981 * Whole abstract * | 1 | G 05 F  1/577 H 02 H  3/00 |
| A | EP-A-0 037 885  (IBM) * Claim 1; figure 2 * | 1 | |
| A | GB-A-2 055 263  (TOSHIBA) * Abstract; figure 2 * | 1 | |
| P,X | IBM TECHNICAL DISCLOSURE BULLETIN, vol. 28, no. 3, August 1985, pages 1054-1056, New York, US; "Automatic multi-level overcurrent protection circuit" * Whole document * | 1-4 | TECHNICAL FIELDS SEARCHED (Int. Cl.4) G 05 F  1/00 H 02 H  3/00 |

The present search report has been drawn up for all claims

| Place of search | Date of completion of the search | Examiner |
|---|---|---|
| THE HAGUE | 07-11-1986 | ZAEGEL B.C. |